# EUROPEAN PATENT SPECIFICATION

(11) **EP 2 980 901 B1**
(45) Date of publication and mention of the grant of the patent: **24.10.2018**
(21) Application number: 14179124.4
(22) Date of filing: 30.07.2014
(51) Int. Cl.: H01M 8/04029, H01M 8/04701, H01M 8/04044, H01M 8/04089, H01M 8/04007

(54) **Improved cooling concept for a fuel cell system for a vehicle and aircraft having such a fuel cell system**
Verbessertes Kühlungskonzept für ein Brennstoffzellensystem für ein Fahrzeug und Flugzeug mit einem solchen Brennstoffzellensystem
Concept de refroidissement amélioré pour un système de pile à combustible pour un véhicule et aéronef comprenant un tel système de pile à combustible

(43) Date of publication of application: 03.02.2016
(73) Proprietor: Airbus Operations GmbH, 21129 Hamburg (DE)
(72) Inventor: Klewer, Guido, 21129 Hamburg (DE); Lüdders, Hauke-Peer, 21129 Hamburg (DE)
(74) Representative: LKGLOBAL Lorenz & Kopf PartG mbB Patentanwälte

(56) References cited:
- EP-A1- 2 712 013
- WO-A1-96/41393
- US-A1- 2007 248 861
- US-A1- 2013 022 888

## Description

### TECHNICAL FIELD

The invention relates to a fuel cell system for a vehicle and aircraft having such a fuel cell system.

### BACKGROUND OF THE INVENTION

Today's aircraft are often equipped with separate systems for emergency power supply and cargo fire suppression. For a so-called "total engine flame out" (TEFO) situation or the loss of a main electrical power supply (LMES), a ram air turbine for providing emergency power is designated. Ram air turbines are capable for providing sufficient power when the speed of the impinging ram air is sufficient. However, this may be critical in a phase close to touchdown during the landing phase of the aircraft.

For extinguishing or suppressing a fire in a cargo compartment of an aircraft, Halon fire extinguishers were often used. Due to adverse effects of Halon for the ozone layer and as Halon will be limited by authorities, a replacement of Halon is necessary.

It is an approach to provide an emergency power system in an aircraft based on a fuel cell that generates electrical power and, as by-products, thermal power, water and, in case air is used as an oxidant, oxygen depleted air. If the remaining oxygen content in the cathode air is reduced to approximately 12%, this oxygen depleted air is usable for suppressing fire in case of a fire event on board or be used for fuel tank inerting in order to increase the safety in the fuel system.

The thermal power needs to be disposed of the fuel cell in order to maintain an accurate operation. It is known to use air cooling or liquid cooling. In particular in aircraft installations it is known to use cooling loops coupled with a centralized heat sink for cooling equipment with a certain thermal load.

EP 2 712 013 A1 shows a fuel cell system inter alia comprising a cooling system with a coolant circuit and a heat dissipation device.

US 2007/0248861 A1 discloses a cooling device for fuel cells and a motor vehicle equipped with such a cooling device.

### SUMMARY OF THE INVENTION

It may be an object of the invention to propose an alternate cooling system capable of cooling a fuel cell system in an aircraft, wherein the cooling system comprises a significant lower weight and a simple setup at the same time.

The object is met by an aircraft comprising the features defined in claim 1. Advantageous embodiments and further improvements may be gathered from the sub-claims and the following description.

An aircraft comprising a fuselage, engines, a bleed air port and a fuel cell system arranged in the fuselage is proposed, the fuel cell system comprising at least one fuel cell, at least one fuel cell heat exchanger arranged in or at the at least one fuel cell for receiving heat of the at least one fuel cell, at least one thermal dissipation unit, an additional heat exchanger and a cooling loop having a plurality of fluid line segments for conveying a coolant. The at least one fuel cell heat exchanger is coupled with the at least one thermal dissipation unit through the cooling loop. The additional heat exchanger is arranged in the cooling loop and is adapted for receivinheat from an external source and for raising the temperature of a coolant flowing in the cooling loop. A cathode reactant gas heat exchanger is arranged upstream of an air inlet of a cathode section of the at least one fuel cell and downstream of a coolant outlet of the fuel cell. The bleed air port as a source of compressed air is coupled with a cathode side of the at least one fuel cell.

The fuel cell may be realized by means of a single fuel cell, a fuel cell stack having a plurality of interconnected fuel cells or an arrangement of fuel cells or fuel cell stacks in a series or parallel connection. Several fuel cell types may be used for the fuel cell system according to the invention, which may include a low temperature, a medium temperature or a high temperature fuel cell type that produces electricity and heat as well as water, which arises at a cathode side of the at least one fuel cell. In vehicle installations, polymer electrolyte membrane fuel cells with a low or medium temperature range may be preferred.

For being able to dispose of heat from the at least one fuel cell, at least one dedicated fuel cell heat exchanger is arranged in or at the at least one fuel cell. This does not necessarily mean that the fuel cell heat exchanger is a separate device, as it may be realized by cooling channels in the fuel cell or a certain design of a housing of the at least one fuel cell. Resultantly, heat that arises during the fuel cell process is transferred to the coolant flowing in the cooling loop. The sizing of the fuel cell heat exchanger depends on the temperature level and the intended flow rate of the coolant in order to not exceed a predetermined maximum temperature, depending on the type of the at least one fuel cell. Most preferably, the at least one fuel cell heat exchanger is an integrated component of the at least one fuel cell, which may be included into a compact fuel cell package.

The at least one thermal dissipation unit may be any device capable of dissipating heat from the coolant into the surrounding of the vehicle, thereby lowering the temperature level of the coolant, which may then flow back to the fuel cell heat exchanger for further cooling. A plurality of different types of thermal dissipation units are imaginable, which comprise heat exchangers for dissipating heat into an airflow surrounding the vehicle, into at least one compartment or interior space where the at least one fuel cell and/or the heat dissipation unit is installed, a liquid-liquid heat exchanger for dissipation of heat into a liquid reservoir, such as a fuel tank or a hydrogen tank, etc. In case the fuel cell system is able to provide emergency power sufficient for a safe operation of the vehicle in case of a failure of primary power sources, the thermal dissipation unit may provide a sufficient amount of cooling power preferably achievable through a liquid-air heat exchanger.

The additional heat exchanger may be coupled to any heat load, i.e. any device that generates heat inside the vehicle and that requires cooling. A gist of the invention lies in that the additional heat exchanger raises the temperature of the coolant inside the cooling loop, which leads to an increased temperature difference between a heat sink thermally coupled with the thermal dissipation unit and the coolant flowing in the cooling loop. Preferably, the additional heat exchanger is thermally coupled with another component of the fuel cell system, such that the integration into a single cooling loop leads to an improved system reliability as well as a strictly limited weight. The higher the temperature of the coolant at a coolant inlet of the thermal dissipation unit is, the less active surface and consequently the less weight of the thermal dissipation unit is necessary. In the following, a power electronics heat exchanger is mentioned, which may be one of the at least one additional heat exchanger. Also, a cathode reactant gas heat exchanger, which is mentioned below, may also be one of the at least one additional heat exchanger.

In an advantageous embodiment, the fuel cell system further comprises a power electronics unit for the control and conversion of electrical power of the at least one fuel cell, wherein the power electronics comprises a power electronics heat exchanger arranged as an additional heat exchanger in the context of the invention in or at the power electronics unit for receiving heat of the power electronics unit and wherein the power electronics heat exchanger is arranged in the cooling loop upstream of the at least one fuel cell heat exchanger. During the operation of the power electronics, which may be necessary for providing a sufficient voltage level for the devices that are supplied with power from the fuel cell system, heat is generated. For maintaining the operation of the power electronics unit and for preventing overheat or damage of the components in the power electronics, sufficient cooling is necessary. By the integration of the power electronics heat exchanger into the cooling loop of the fuel cell system, a combined cooling is possible and a separate cooling system for the power electronics unit is not mandatory. Still further, due to the fact that the fuel cell heat exchanger may transfer a large amount of heat to the cooling loop, while the at least one additional heat exchanger may only transfer a relatively small amount of heat, the temperature spreading of the coolant in the cooling loop is more efficiently used than in separate cooling loops for the fuel cell heat exchanger and the additional heat exchanger alone. Also, the total weight of the components and the coolant necessary for cooling is reduced in comparison to separate cooling loops.

An advantageous embodiment further comprises a coolant bypass parallel to the power electronics heat exchanger for bypassing the power electronics heat exchanger at least with a part of the coolant flow. Hence, it is not necessary to lead the total coolant flow through the power electronics heat exchanger in case the demand for cooling power differs in comparison with the at least one fuel cell. The coolant bypass may simple be a coolant line arranged parallel to the power electronics heat exchanger. Hence, pressure losses may be reduced. Further, weight may be saved, since fluid channels may be smaller in the power electronics heat exchanger.

It may also be feasible to provide at least one valve for adjusting the flow rate through the coolant bypass or for selectively opening and closing the coolant bypass. The latter may be conducted in a certain interval or simply in cases where a low cooling power demand for the power electronics unit arises.

In a still further advantageous embodiment, a cathode reactant gas heat exchanger as an additional heat exchanger in the context of the invention is present, which is arranged in the cooling loop downstream of the at least one fuel cell heat exchanger, wherein the cathode reactant gas heat exchanger is adapted for being flown through by air supplied to a cathode of the at least one fuel cell. In general, the at least one fuel cell may be operated under consumption of hydrogen and oxygen. The oxygen may be delivered in the form of oxygen containing air, for avoiding an excessive weight or complexity due to separate oxygen storage and supply means, especially for installation in an aircraft. It is desired to provide the air having a certain pressure level, which may clearly exceed the ambient pressure of the region or compartment in which the fuel cell system is installed. For example, the pressure of the air supply may be 50% over the ambient pressure. Hence, due to the compression, the air delivered to the fuel cell system may comprise an elevated temperature. By flowing through the cathode reactant gas heat exchanger the air is cooled. Consequently, the temperature level of the air supplied to the fuel cell system is adjusted to a suitable temperature for the fuel cell cathode and the coolant temperature is raised. Hence, besides improving the heat transfer in the thermal dissipation unit, a separate precooler for the air supply may be eliminated.

In the invention, the fuel cell system further comprises a source of compressed air coupled with a cathode side of the at least one fuel cell. In the invention, the source of compressed air is realized through a bleed air port, which may already be present for supplying an environmental control system or any other bleed air consuming devices. The bleed air may already be precooled and expanded to a certain pressure level suitable for use in the at least one fuel cell. As an alternative, the source of compressed air may include an air inlet and a compressor, which compresses the air taken in through the air inlet.

In an advantageous embodiment, the thermal dissipation unit may be arranged in a ram air channel. Consequently, during the operation of the vehicle, in which the fuel cell system is installed, an airflow may pass through or above the thermal dissipation unit when the vehicle is in motion, thereby clearly increasing the heat transfer. Resultantly, a reliable cooling is accomplished.

In this regard, it is indicated that for improving the heat transfer in situations, in which the vehicle is not in motion and in which no airflow is present in the ram air channel, an air conveying means may be used for providing a certain air flow. This supports the heat transfer in the ram air channel. For example, a fan may be arranged in the ram air channel, which fan may be operated when this situation occurs, especially when the engines of the vehicle are not operated.

Preferably, the coolant is a liquid coolant comprising glycol and water. Most preferably, the liquid coolant is an ethylene-glycol water mixture. The coolant resultantly has a freezing protection and a clearly increased boiling point depending on the percentages of water and glycol. These coolants are in wide spread use and provide a reliable heat transfer.

It may furthermore be advantageous to pressurize the cooling loop with a certain minimum pressure, such that the boiling point may be shifted to higher temperatures, in order to reliably avoid the boiling point especially with cooling medium and high temperature fuel cells.

In a particularly advantageous embodiment, a de-ionization filter is arranged in the cooling loop. Thereby, a low coolant electrical conductivity and, consequently, a high fuel cell efficiency is maintained. Depending on the characteristics of the de-ionization filter, it may be installed parallel to any of the components in the cooling loop or in a serial connection. For example, the cooling loop may comprise a coolant pump, wherein the de-ionization filter may be arranged parallel to the coolant pump in a recirculation path. However, the de-ionization filter may also be positioned inside one of a plurality of branches of the power electronics unit or in a bypass parallel to the power electronics unit. In this regard, an as low as possible additional friction loss arising from the de-ionization filter should be considered.

In an advantageous embodiment, the aircraft further comprises a ram air channel in the fuselage, wherein the thermal dissipation unit is arranged in the ram air channel. The position of the ram air channel may be chosen according to the general setup or design of the aircraft. For example, such a ram air channel may be arranged in a wing root region or at an underside of the fuselage.

Still further, the aircraft further comprises at least one interior space in the fuselage, wherein the thermal dissipation unit is arranged in the interior space and is adapted for dissipate heat into the interior space heating up this space using the thermal capacity of this space, including all installations therein. Especially when the fuel cell system is arranged in a pressurized part of the fuselage, it may be advantageous to also conduct the required cooling in this part of the fuselage. However, the fuel cell system may also be placed in an unpressurized part of the fuselage, and the invention is not limited to where the fuel cell system is installed. In this regard, it is indicated that especially in larger commercial aircraft, pressurized spaces comprise a large volume and a large wall surface dividing the pressurized space from the surrounding of the aircraft. During the normal operation of the aircraft, the ambient temperature is usually clearly lower than the temperature inside the pressurized space. For this purpose, a thermal insulation is arranged on the fuselage to reduce the heat transfer from inside the pressurized space to the outside. However, providing an additional heat load in the pressurized space through the thermal dissipation unit, the temperature inside the pressurized space may only rise insignificantly, but due to the large wall surface, a reliable dissipation into the ambient can be accomplished. In this regard, a cargo compartment in an aircraft suggests itself for this purpose due to the lack of heat load from passengers. However, this may also apply to an unpressurized, but ventilated interior space.

### BRIEF DESCRIPTION OF THE DRAWINGS

Further characteristics, advantages and application options of the present invention are disclosed in the following description of the exemplary embodiments in the figures. All the described and/or illustrated characteristics per se and in any combination form the subject of the invention, even irrespective of their composition in the individual claims or their interrelationships. Furthermore, identical or similar components in the figures have the same reference characters.

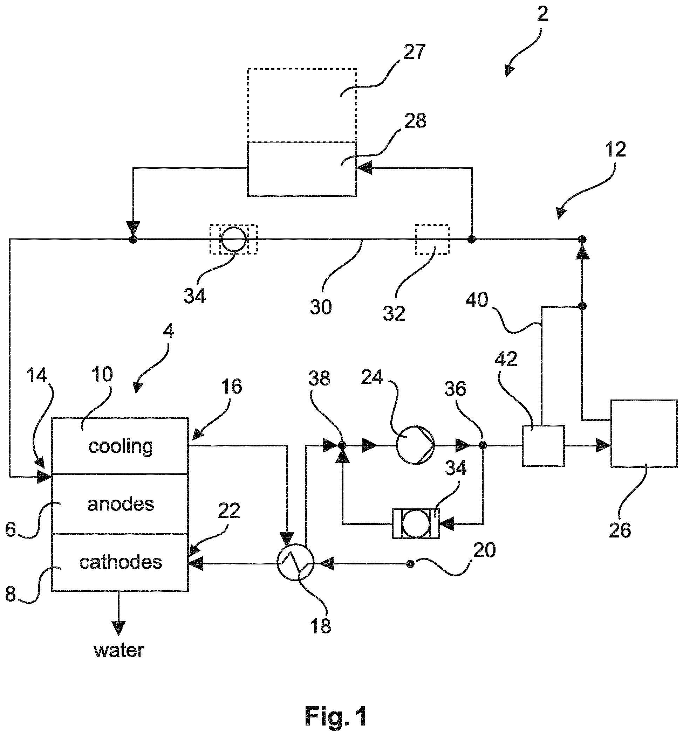

Fig. 1 shows a fuel cell system in a schematic, block-oriented view.

### DETAILED DESCRIPTION OF EXEMPLARY EMBODIMENTS

Fig. 1 shows a fuel cell system 2 according to the invention. A fuel cell 4 in form of a fuel cell stack is provided, which comprises an anode section 6 and a cathode section 8 as well as a fuel cell heat exchanger 10 thermally coupled with the anode section 6 and the cathode section 8. As a focus of the invention lies in the cooling, hydrogen supply is neglected in this figure.

For cooling, a cooling loop 12 is provided in which a coolant flows. For example, coolant flows into a coolant inlet 14 of the fuel cell heat exchanger 10, receives heat from the fuel cell 4 and exits the fuel cell heat exchanger 10 through a coolant outlet 16. Further downstream, a cathode reactant gas heat exchanger 18 is present, through which the coolant flows.

In the cathode reactant gas heat exchanger 18, air from a compressed air source 20 flows through into an air inlet 22 of the cathode section 8. Resultantly, the coolant flowing from the coolant outlet 16 receives a further amount of heat and comprises an even more raised temperature. This is caused by the elevated temperature of the air from the compressed air source 20, which may be a compressor or a bleed air port, which provide air at an elevated pressure, which may be in a range of 50% or higher above the ambient pressure faced by the fuel cell system 2. Hence, the air entering the air inlet 22 of the cathode section 8 is cooled, leading to an improved performance and reducing the thermal stress on the fuel cell 4.

In this regard it is noted that in some cases, which only seldomly occur, air from the pressurized air source 20 may be clearly cooler than the coolant in the cooling loop 12. In the cathode reactant gas heat exchanger 18, this air is then heated up slightly, which, again, reduces the thermal stress of the fuel cell 4 and clearly improves its reliability and performance.

Downstream of the cathode reactant gas heat exchanger 18 in the coolant loop 12, a pump 24 is arranged, which is adapted for conveying the coolant in the coolant loop. Downstream of pump 24, a thermal dissipation unit 26 is provided, which is adapted for dissipating the heat collected in the cooling loop 12 to the surrounding of the thermal dissipation unit 26. This may be a heat exchanger attached to a skin of the aircraft, into a ram air channel or into an interior space of the aircraft. However, it should be considered that a sufficient heat dissipation is accomplished in all possible situations, exemplarily by always maintaining a certain airflow or by maintaining a certain temperature difference between the coolant and the surrounding of the thermal dissipation unit 26.

Coolant exiting the thermal dissipation unit 26 flows back to the coolant inlet 14 of the fuel cell heat exchanger 10. However, a power electronics heat exchanger 28 attached to a power electronics unit 27, which is only schematically indicated by means of dashed lines, may be coupled to the cooling loop 12 in order to provide a sufficient cooling power for the power electronics unit 27 required for controlling and converting the electrical power generated in the fuel cell 4. For adjusting the flow rate flowing through the power electronics heat exchanger 28, a bypass 30 is provided in a parallel connection to the power electronics heat exchanger 28. If desired, which is depicted as a dashed box 32, the bypass 30 may comprise a flow control means 32, which is adapted for switching or adjusting the flow rate through the bypass 30.

A de-ionization filter 34 is arranged in a parallel connection to the pump 24 and maintains a low coolant electrical conductivity for maintaining a high fuel cell efficiency. The de-ionization filter 34 may be flown through with coolant from an inlet port 36 upstream of pump 24 and exiting an outlet port 38 upstream of pump 24. However, such a de-ionization filter 34 may also be provided in the bypass 30, as indicated by dashed box.

Still further, a main bypass 40 having a main bypass valve 40 may be arranged in the cooling loop 12 for bypassing coolant around the thermal dissipation unit 26. The main bypass valve 42 may be able to switch or adjust the flow rate flowing through the main bypass 42. By this arrangement, a temperature control of the coolant in the cooling loop 12 may be achieved.

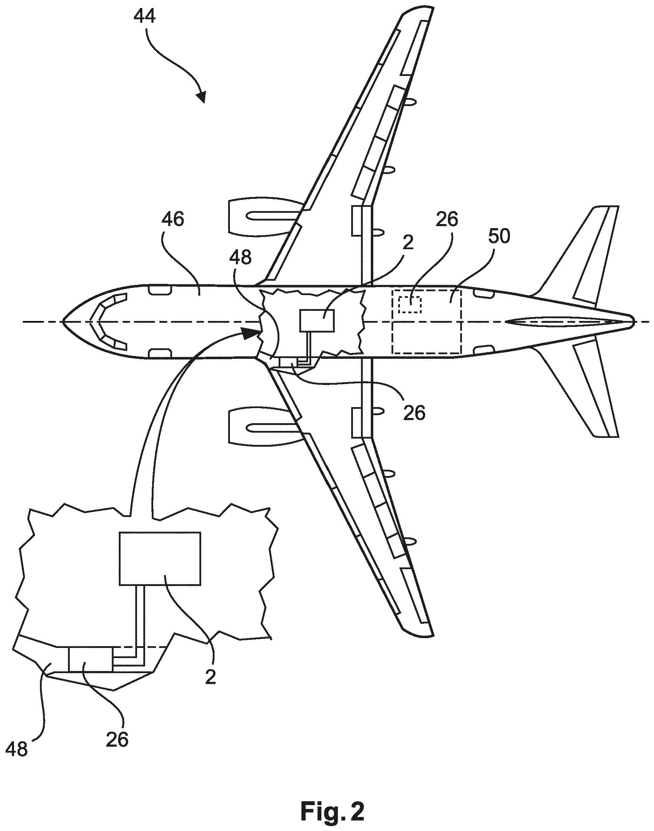

Fig. 2 shows an aircraft 44 having a fuselage 46 and a fuel cell system 2 installed therein. The installation position of the fuel cell system 2 is arbitrarily chosen, may vary and is not limiting the subject-matter of the invention. A ram air channel 48 may be arranged in a suitable position, such as in a wing root region, which ram air channel 48 may house the thermal dissipation unit 26.

As another exemplary embodiment, the thermal dissipation unit 26 may be arranged in an interior space 50, which is indicated with a dashed line. Again, the schematic view in Fig. 2 shall not limit the subject-matter of the invention. It is also conceivable that the space 50 extends along a substantial part of the length of the aircraft 44. For example, the interior space 50 may be a cargo compartment or cargo deck. The thermal dissipation unit 26 may dissipate the heat from the coolant into the interior space in order to heat the air and all installations present in the interior space.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments can also be used in combination with other characteristics or steps of other exemplary embodiments described above. Reference characters in the claims are not to be interpreted as limitations.

## Claims

1. Aircraft (44) comprising a fuselage, engines, a bleed air port and a fuel cell system (2) arranged in the fuselage (46), the fuel cell system (2) comprising
- at least one fuel cell (4),
- at least one fuel cell heat exchanger (10) arranged in or at the at least one fuel cell (4) for receiving heat of the at least one fuel cell (4),
- at least one thermal dissipation unit (26),
- at least one additional heat exchanger (18, 28) and
- a cooling loop (12) having a plurality of fluid line segments for conveying a coolant,
wherein the at least one fuel cell heat exchanger (10) is coupled with the at least one thermal dissipation unit (26) through the cooling loop (12), and
wherein the additional heat exchanger (18, 28) is arranged in the cooling loop (12) and is adapted for receiving heat from an external source and for raising the temperature of a coolant flowing in the cooling loop (12),
**characterized by** a cathode reactant gas heat exchanger (18), which is arranged upstream of an air inlet (22) of a cathode section (8) of the at least one fuel cell (4) and downstream of a coolant outlet (16) of the fuel cell (4), and
in that the bleed air port as a source of compressed air (20) is coupled with a cathode (8) side of the at least one fuel cell (4).

2. Aircraft (44) according to claim 1,
further comprising a power electronics unit (27) for the control and conversion of electrical power of the at least one fuel cell (4),
wherein the power electronics unit (27) comprises a power electronics heat exchanger (28) arranged in or at the power electronics unit (27) for receiving heat of the power electronics unit (27), and
wherein the power electronics heat exchanger (28) is arranged in the cooling loop upstream of the at least one fuel cell heat exchanger (10).

3. Aircraft (44) system according to claim 2,
further comprising a coolant bypass (30) parallel to the power electronics heat exchanger (28) for bypassing the power electronics heat exchanger (28) at least with a part of the coolant flow.

4. Aircraft (44) according to any of the previous claims,
further comprising a cathode reactant gas heat exchanger (18),
wherein the cathode reactant gas heat exchanger (18) is arranged in the cooling loop (12) downstream of the at least one fuel cell heat exchanger (10) and
wherein the cathode reactant gas heat exchanger (18) is adapted for being flown through by air supplied to a cathode (8) of the at least one fuel cell (4).

5. Aircraft (44) according to any of the previous claims,
further comprising a source of compressed air (20) coupled with the cathode (8) side of the at least one fuel cell (4).

6. Aircraft (44) according to any of the previous claims,
wherein the thermal dissipation unit (26) is arranged in a ram air channel (48).

7. Aircraft (44) according to any of the previous claims,
wherein the coolant is a liquid coolant comprising glycol and water.

8. Aircraft (44) according to any of the previous claims,
further comprising at least one de-ionization filter (34) arranged in the cooling loop (12).

9. Aircraft (44) of any of the preceding claims,
further comprising a ram air channel (48) in the fuselage (46), wherein the thermal dissipation unit (26) is arranged in the ram air channel (48).

10. Aircraft (44) of any of the preceding claims,
further comprising at least one interior space (50) in the fuselage,
wherein the thermal dissipation (26) unit is arranged in the at least one interior space (50) and is adapted for dissipate heat into the at least one interior space (50).

## Patentansprüche

1. Flugzeug (44), aufweisend einen Flugzeugrumpf, Triebwerke, einen Zapfluftanschluss und ein Brennstoffzellensystem (2), das in dem Flugzeugrumpf (46) angeordnet ist, das Brennstoffzellensystem (2) aufweisend
- mindestens eine Brennstoffzelle (4),
- mindestens einen Brennstoffzellenwärmetauscher (10), der in oder an der mindestens einen Brennstoffzelle (4) zum Empfangen von Wärme der mindestens einen Brennstoffzelle (4) angeordnet ist,
- mindestens eine thermische Abfuhreinheit (26),
- mindestens einen zusätzlichen Wärmetauscher (18, 28) und
- einen Kühlkreislauf (12) mit einer Vielzahl von Fluidleitungssegmenten zum Leiten eines Kühlmittels,
wobei der mindestens eine Brennstoffzellenwärmetauscher (10) über den Kühlkreislauf (12) mit der mindestens einen thermischen Abfuhreinheit (26) gekoppelt ist, und
wobei der zusätzliche Wärmetauscher (18, 28) in dem Kühlkreislauf (12) angeordnet ist und dazu eingerichtet ist, Wärme von einer externen Quelle zu empfangen und die Temperatur eines in dem Kühlkreislauf (12) strömenden Kühlmittels anzuheben,
**gekennzeichnet durch** einen Kathodenreaktantgas-Wärmetauscher (18), der stromaufwärts eines Lufteinlasses (22) eines Kathodenabschnitts (8) der mindestens einen Brennstoffzelle (4) und stromabwärts eines Kühlmittelauslasses (16) der Brennstoffzelle (4) angeordnet ist, und
durch einen mit einer Kathodenseite (8) der mindestens einen Brennstoffzelle (4) gekoppelten Zapflufteinlass als Quelle komprimierter Luft (20).

2. Flugzeug (44) nach Anspruch 1,
ferner aufweisend eine Leistungselektronikeinheit (27) zum Regeln und zum Umwandeln elektrischer Leistung der mindestens einen Brennstoffzelle (4),
wobei die Leistungselektronikeinheit (27) einen Leistungselektronikwärmetauscher (28) aufweist, der in oder an der Leistungselektronikeinheit (27) angeordnet ist, um Wärme der Leistungselektronikeinheit (27) zu empfangen, und
wobei der Leistungselektronikwärmetauscher (28) in dem Kühlkreislauf stromaufwärts des mindestens einen Brennstoffzellenwärmetauschers (10) angeordnet ist.

3. Flugzeug (44) nach Anspruch 2,
ferner aufweisend einen Kühlmittelbypass (30) parallel zu dem Leistungselektronikwärmetauscher (28), um den Leistungselektronikwärmetauscher (28) mit mindestens einem Teil des Kühlmittelstroms zu umlaufen.

4. Flugzeug (44) nach einem der vorhergehenden Ansprüche,
ferner aufweisend einen einen Kathodenreaktantgas-Wärmetauscher (18),
wobei der Kathodenreaktantgas-Wärmetauscher (18) in dem Kühlkreislauf (12) stromabwärts des mindestens einen Brennstoffzellenwärmetauschers (10) angeordnet ist, und
wobei der Kathodenreaktantgas-Wärmetauscher (18) dazu eingerichtet ist, von Luft durchflossen zu werden, die einer Kathode (8) der mindestens einen Brennstoffzelle (4) zugeführt wird.

5. Flugzeug (44) nach einem der vorhergehenden Ansprüche,
ferner aufweisend eine Quelle komprimierter Luft (20), die mit der Kathodenseite (8) der mindestens einen Brensstoffzelle (4) gekoppelt ist.

6. Flugzeug (44) nach einem der vorhergehenden Ansprüche,
wobei die thermische Abfuhreinheit (26) in einem Stauluftkanal (48) angeordnet ist.

7. Flugzeug (44) nach einem der vorhergehenden Ansprüche,
wobei das Kühlmittel ein flüssiges Kühlmittel ist, das Glykol und Wasser aufweist.

8. Flugzeug (44) nach einem der vorhergehenden Ansprüche,
ferner aufweisend mindestens einen Deionisierungsfilter (34), der in dem Kühlkreislauf (12) angeordnet ist.

9. Flugzeug (44) nach einem der vorhergehenden Ansprüche,
ferner aufweisend einen Stauluftkanal (48) in dem Flugzeugrumpf (46), wobei die thermische Abfuhreinheit (26) in dem Stauluftkanal (48) angeordnet ist.

10. Flugzeug (44) nach einem der vorhergehenden Ansprüche,
ferner aufweisend mindestens einen Innenraum (50) in dem Flugzeugrumpf,
wobei die thermische Abfuhreinheit (26) in dem mindestens einen Innenraum (50) angeordnet ist und dazu eingerichtet ist, Wärme in den mindestens einen Innenraum (50) abzuführen.

## Revendications

1. Aéronef (44) comprenant un fuselage, des moteurs, un orifice de purge et un système de pile à combustible (2) disposé dans le fuselage (46), le système de pile à combustible (2) comprenant
- au moins une pile à combustible (4),
- au moins un échangeur de chaleur à pile à combustible (10) disposé dans ou au l'au moins une pile à combustible (4) pour recevoir la chaleur de la au moins une pile à combustible (4),
- au moins une unité de dissipation thermique (26),
- au moins un échangeur de chaleur supplémentaire (18, 28) et
- une boucle de refroidissement (12) ayant une pluralité de segments de ligne de fluide pour transporter un fluide de refroidissement,
dans lequel le au moins un échangeur de chaleur à pile à combustible (10) est couplé à la au moins une unité de dissipation thermique (26) à travers la boucle de refroidissement (12), et
dans lequel l'échangeur de chaleur supplémentaire (18, 28) est agencé dans la boucle de refroidissement (12) et est adapté pour recevoir de la chaleur d'une source externe et pour élever la température d'un réfrigérant circulant dans la boucle de refroidissement (12),
**caractérisé par** un échangeur de chaleur à gaz réactif cathodique (18), qui est disposé en amont d'une entrée d'air (22) d'une section cathodique (8) de la au moins une pile à combustible (4) et en aval d'une sortie de réfrigérant (16) de la pile à combustible (4), et
en ce que l'orifice d'air de prélèvement en tant que source d'air comprimé (20) est couplé avec un côté cathodique (8) de la au moins une pile à combustible (4).

2. Aéronef (44) selon la revendication 1,
comprenant en outre une unité d'électronique de puissance (27) pour le contrôle et la conversion de l'énergie électrique de la au moins une pile à combustible (4),
dans lequel l'unité d'électronique de puissance (27) comprend un échangeur de chaleur d'électronique de puissance (28) disposé dans ou à l'unité d'électronique de puissance (27) pour recevoir la chaleur de l'unité d'électronique de puissance (27), et
dans lequel l'échangeur de chaleur d'électronique de puissance (28) est disposé dans la boucle de refroidissement en amont du au moins un échangeur de chaleur à pile à combustible (10).

3. Aéronef (44) selon la revendication 2,
comprenant en outre une dérivation de liquide de refroidissement (30) parallèle à l'échangeur de chaleur de l'électronique de puissance (28) pour contourner l'échangeur de chaleur (28) de l'électronique de puissance au moins avec une partie de l'écoulement de liquide de refroidissement.

4. Aéronef (44) selon l'une quelconque des revendications précédentes,
comprenant en outre un échangeur de chaleur à gaz réactif de cathode (18),
dans lequel l'échangeur de chaleur à gaz réactif de cathode (18) est disposé dans la boucle de refroidissement (12) en aval du au moins un échangeur de chaleur à pile à combustible (10) et
dans lequel l'échangeur de chaleur à gaz réactif de cathode (18) est adapté pour être traversé par l'air fourni à une cathode (8) de la au moins une pile à combustible (4).

5. Aéronef (44) selon l'une quelconque des revendications précédentes,
comprenant en outre une source d'air comprimé (20) couplée au côté cathode (8) de la au moins une pile à combustible (4).

6. Aéronef (44) selon l'une quelconque des revendications précédentes,
dans lequel l'unité de dissipation thermique (26) est agencée dans un canal d'air dynamique (48).

7. Aéronef (44) selon l'une quelconque des revendications précédentes,
dans lequel le réfrigérant est un liquide de refroidissement comprenant du glycol et de l'eau.

8. Aéronef (44) selon l'une quelconque des revendications précédentes,
comprenant en outre au moins un filtre de désionisation (34) disposé dans la boucle de refroidissement (12).

9. Aéronef (44) de toutes les revendications précédentes,
comprenant en outre un canal d'air dynamique (48) dans le fuselage (46), dans lequel l'unité de dissipation thermique (26) est agencée dans le canal d'air dynamique (48).

10. Aéronef (44) de toutes les revendications précédentes,
comprenant en outre au moins un espace intérieur (50) dans le fuselage,
dans lequel l'unité de dissipation thermique (26) est agencée dans l'au moins un espace intérieur (50) et est adaptée pour dissiper de la chaleur dans l'au moins un espace intérieur (50).
